# EUROPÄISCHE PATENTSCHRIFT

(11) **EP 3 768 501 B1**
(45) Veröffentlichungstag und Bekanntmachung des Hinweises auf die Patenterteilung: **10.11.2021**
(21) Anmeldenummer: 19711396.2
(22) Anmeldetag: 22.03.2019
(51) Int. Cl.: B29D 11/00, B24B 13/005, B29C 63/00

(54) **BRILLENGLASROHLING SOWIE VERFAHREN ZUM HERSTELLEN EINES BRILLENGLASES AUS EINEM BRILLENGLASROHLING**
SPECTACLE LENS BLANK AND METHOD FOR PRODUCTION OF A SPECTACLE LENS FROM A SPECTACLE LENS BLANK
PALET DE VERRE DE LUNETTES AINSI QUE PROCÉDÉ DE FABRICATION D'UN VERRE DE LUNETTES À PARTIR D'UN PALET DE VERRE DE LUNETTES

(30) Priorität: 23.03.2018 EP 18163572
(43) Veröffentlichungstag der Anmeldung: 27.01.2021
(73) Patentinhaber: Carl Zeiss Vision International GmbH, 73430 Aalen (DE)
(72) Erfinder: MESCHENMOSER, Ralf, 73457 Essingen (DE); VALLERIUS, Ralf, 89520 Heidenheim (DE); HÄNSCH, Sven, 73453 Abtsgmünd (DE)
(74) Vertreter: Glawe, Delfs, Moll
(86) Internationale Anmeldenummer: PCT/EP2019/057331
(87) Internationale Veröffentlichungsnummer: WO 2019/180251

(56) Entgegenhaltungen:
- WO-A1-2007/001251
- WO-A1-2017/046803
- DE-U1- 7 723 333
- US-A- 4 959 118
- US-A- 5 916 017
- US-A1- 2008 117 382
- US-A1- 2013 075 465
- US-A1- 2013 206 328

## Beschreibung

Die Erfindung betrifft einen Brillenglasrohling mit zumindest einer optisch fertig bearbeiteten Fläche nach dem Oberbegriff des Patentanspruchs 1 sowie ein Verfahren zum Herstellen eines Brillenglases aus einem Brillenglasrohling nach dem Oberbegriff des Patentanspruchs 5.

Man unterscheidet Brillenglas-Halbfertigfabrikate, kurz Brillenglashalbfabrikate, und Brillenglas-Fertigfabrikate. Als Halbfertigfabrikate, Halbfabrikate oder Halbfertigprodukte bezeichnet man in der Produktionswirtschaft teilweise fertig erzeugte Vorprodukte, welche entweder zur späteren Verarbeitung im eigenen Unternehmen auf Lager gelegt oder an andere Unternehmen geliefert und dort fertig produziert werden. Brillenglas-Halbfertigfabrikate oder Brillenglashalbfabrikate sind Linsenrohlinge mit nur einer optisch fertig bearbeiteten Fläche (vgl. Heinz Diepes, Rolf Blendowske "Optik und Technik der Brille", Optische Fachveröffentlichung GmbH, Heidelberg, 2002, Seite 560). Als Fertigfabrikate (Fertigprodukte) bezeichnet man fertig erzeugte, an Endkunden bzw. Brillenträger verkaufsfähige Produkte, welche entweder sofort ausgeliefert werden oder für den späteren Verkauf im eigenen Unternehmen auf Lager gelegt werden. Brillenglas-Fertigfabrikate oder fertige Brillengläser sind Brillengläser mit zwei optisch fertig bearbeiteten optischen Flächen. Diese können endgerandet sein oder nicht (vgl. ebd., S. 559). Ein endgerandetes Brillenglas ist demnach ein fertiges Brillenglas, das durch Randbearbeitung auf die endgültige Größe und Form gebracht wurde (vgl. ebd., S. 559). Die DIN EN ISO 13666:2013-10 definiert in Abschnitt 8.4.15 den Begriff Formrandung (oder Formfernrandung) als Prozess, bei dem rohkantige fertige Brillengläser gerandet werden, ohne dass die Brillenfassung körperlich vorliegt; dabei werden die Tracer-Daten aus einer Datenbank übernommen oder es werden die elektronisch übermittelten Daten genutzt. Anstelle der Begriffe Endrandung oder Formrandung wird auch der Begriff Einschleifen verwendet (siehe DIN EN ISO 13666:2013-10 Abschnitt 8.5.1).

Zur Beschreibung von nicht fertigen Brillengläsern wird häufig auch der Begriff Blanks verwendet. Blanks sind üblicherweise vorgeformte Materialstücke zur Herstellung von Brillengläsern oder -linsen in irgendeinem Zustand vor der Beendigung der Oberflächenbearbeitung (vgl. ebd.; S. 556). Der Begriff Semifinished Blanks ist ein Synonym für den Ausdruck Halbfertigfabrikate. Die Begriffe Brillengläser und Brillenlinsen werden ebenfalls synonym verwendet.

Brillenglas-Halbfertigfabrikate und Brillenglas-Fertigfabrikate weisen jeweils eine für die objektseitige und eine für die gegenüberliegende augenseitige Anordnung für einen Brillenträger bestimmte optische Flächen und eine diese beabstandende Fläche auf. Die für die Anordnung auf der Objektseite bestimmte optische Fläche wird Vorderfläche bezeichnet, die für die Anordnung auf der Augenseite bestimmte optische Fläche wird Rückfläche genannt. Die dazwischen liegende entweder unmittelbar eine Kante bildend oder mittelbar über eine Kantenfläche einendseitig an die Vorderfläche und andernendseitig an die Rückfläche angrenzende Fläche bezeichnet man als Zylinderrandfläche.

Während in der Vergangenheit Brillengläser vorwiegend aus mineralischen Gläsern, insbesondere Krongläsern (Abbe-Zahl> 55) und Flintgläsern (Abbe-Zahl < 50) hergestellt wurden, sind mittlerweile Brillengläser aus einer Vielzahl an organischen Materialien erhältlich.

Derzeit werden Brillenglas-Halbfertigfabrikate oder -Fertigfabrikate mit sphärischen, asphärischen oder progressiven Vorderflächen in Massenfertigungen mittels Vorder- und Rückflächenformschalen und einem Dichtring abgegossen wie dies z. B. in den Dokumenten DE 3007572 C2, US 6,103,148 A oder JP 2008 191186 A beschrieben ist. Dies gilt für Materialien mit den Handelsbezeichnungen MR-7, MR-8, MR-10 und CR-39/CR-607 und weitere. Bei den Materialien mit den Handelsbezeichnungen MR-7, MR-8, MR-10 handelt es ich um Polythiourethane, die von der Firma Mitsui Chemicals vertrieben werden. Die Abkürzung "MR" steht dabei für Mitsui Resin. CR-39/CR-607/CR-630 sind niedrigbrechende Materialien mit dem Brechwert von 1,50, die von der Firma PPG Industries vertrieben werden. Die Materialien CR-607 und CR-630 werden z. B. für photochrome Anwendungen eingesetzt.

Halbfertigfabrikate oder Fertigfabrikate für Brillengläser aus Polycarbonat werden in Metallformen mittels Spritzgusstechnik erzeugt. Dieses Herstellverfahren ist z. B. in der EP 0955147 A1 beschrieben.

Auftragsspezifische Rezeptbrillengläser, d. h. insbesondere individualisierte Einstärken- und Mehrstärkengläser und im Besonderen Gleitsicht- bzw. Progressivgläser werden durch mechanische Verfahren in ihre finale Form gebracht. Hierbei können die Außenformen rund, oval oder willkürlich, sogenannte Freiformen beschreibend, ausgebildet sein.

Die vorstehend beschriebenen Halbfertig- oder Fertigfabrikate werden häufig einem oder mehreren Veredelungsprozessen unterzogen. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund ihrer Materialeigenschaften und Formgebung nicht hätten. Derartige vorteilhafte Eigenschaften sind neben optischen Eigenschaften, wie z. B. Entspiegelung (siehe z.B. EP 0 698 798 A2), Verspiegelung, Lichtpolarisierung, Färbung usw. auch mechanische Eigenschaften wie Härtung (siehe z.B. DE 10 2010 048 088 A1), Verminderung des Anhaftens von Schmutz oder des Beschlagens, d.h. sog. (super-)hydrophoben (siehe z.B. DE 10 2012 009 691 A1, DE 10 2015 209 794 A1) oder auch oleophoben Eigenschaften (bei denen die Oberflächenenergie signifikant reduziert ist), Erhöhung der Diffusivität (siehe z.B. DE 10 2013 208 310 A1) usw. und/oder elektrische Eigenschaften wie Abschirmung von elektromagnetischer Strahlung, Leitung von elektrischem Strom, d.h. antistatischen Eigenschaften (siehe z.B. EP 1 269 223 A1, DE 10 2010 048 089 A1) usw. und/oder andere physikalische oder chemische Eigenschaften.

Die Applikation von Funktionsschichten erfolgt häufig mit Hilfe von Nassbeschichtungsprozessen. Unter Beschichten wird in der Fertigungstechnik eine Hauptgruppe der Fertigungsverfahren nach DIN 8580 verstanden, die zum Aufbringen einer festhaftenden Schicht aus formlosem Stoff auf die Oberfläche eines Werkstückes genutzt werden. Nassbeschichtungsprozesse sind solche Beschichtungsverfahren, bei dem der Ausgangszustand des Beschichtungsmaterials flüssig ist. Bei der Brillenglasfertigung sind insbesondere Tauchbeschichtungsprozesse und Rotationsbeschichtungsprozesse von besonderer Bedeutung.

Andere Beschichtungsverfahren sind physikalische oder chemische Gasphasenabscheidungsprozesse, wie z.B. thermisches Verdampfen, Kathodenzerstäubung usw.

Die Erfindung bezieht sich auf das Herstellen eines gebrauchsfertigen Brillenglases aus einem Brillenglashalbfabrikat mit einer optisch fertig bearbeiteten Fläche mit oder ohne Funktionsschicht. Dieses Herstellen umfasst zum einen den Schritt (a) der Formgebung der der optisch fertig bearbeiteten Fläche gegenüberliegenden Fläche und zum anderen den Schritt (b) der End- oder Formrandung zur Anpassung des Zylinderrandes an die das gebrauchsfertige Brillenglas aufnehmende Fassungsform. Beide Bearbeitungsschritte erfordern das Halten des Brillenglasrohlings während der jeweiligen Bearbeitungsvorgänge, welche mit Schneidwerkzeugen, insbesondere Fräs-, Polier- und Schleifwerkzeugen, durchgeführt werden. Das Halten des Brillenglasrohlings erfolgt regelmäßig mit Hilfe eines sogenannten Blockstücks, welches mit Hilfe einer niedrigschmelzenden Metalllegierung oder eines polymeren Materials mit der optisch fertig bearbeiteten Fläche des Brillenglashalbfabrikats verbunden wird. Die Metalllegierung oder das polymere Material wird in geschmolzenem Zustand aufgebracht und anschließend gehärtet, wobei eine starre Schicht von vorgewählter Größe und Form entsteht, die das Brillenglashalbfabrikat mit dem Blockstück verbindet. Als Alternative zum Blocken ist beispielsweise auch die Verwendung eines doppelseitigen Klebebandes bekannt (siehe z.B. WO 02/092524 A1).

Ein Fixieren des Brillenglashalbfabrikates kann aber auch mittels Vakuum erfolgen, wenn der Krümmungsradius des Brillenglashalbfabrikats dem der Vakuumaufnahme entspricht (siehe z.B. EP 2 266 754 B1), oder mittels Wachs (siehe z.B. DE 2 208 444 A1) oder mittels Thermoplast (siehe z.B. DE 10 2007 007 161 A1 und DE 2008 022 360 B4) oder mittels Klebstoff (siehe z.B. DE 10 2007 007 161 A1).

Zum Schutz der optisch fertig bearbeiteten Fläche des Brillenglashalbfabrikats beim Blocken sind im Wesentlichen zwei Maßnahmen bekannt, nämlich (i) das Aufbringen einer temporären Schutzschicht und/oder (ii) das Aufbringen einer Schutzfolie auf die optisch fertig bearbeitete Fläche des Brillenglashalbfabrikats vor dem Aufbringen der geschmolzenen Metalllegierung oder des geschmolzenen Polymermaterials. Schutzschicht als auch Schutzfolie müssen eine hinreichende Adhäsion gewährleisten, was insbesondere bei den durch die mechanische Oberflächen- und Randbearbeitung verursachten hohen Scherkräften und bei adhäsionsmindernder Superhydrophob- und/oder Superoleophobbeschichtung eine besondere Herausforderung darstellt.

Die WO 00/68326 A1 beschreibt das Abscheiden einer mit einem selektiven Lösungsmittel löslichen oder dispergierenden temporären Schutzschicht, welche ein Kunststoffbrillenglas vor Verunreinigungen schützt. Die temporäre Schutzschicht wird in flüssiger Form aufgebracht und dann getrocknet.

Die WO 02/092524 A1 beschreibt das Aufbringen einer temporären Schutzschicht, die aus einem Material gebildet ist, das es erlaubt, die Oberflächenenergie des Brillenglases mit hydrophoben und/oder oleophoben Eigenschaften anzuheben, und das geeignet ist, während einer späteren, auf den Formrandungsschritt folgenden Operation eliminiert zu werden. Die temporäre Schutzschicht ist nach diesem Dokument eine mineralische Schicht und insbesondere ein Fluorid oder eine Mischung von Metallfluoriden, ein Oxid oder eine Mischung von Metalloxiden. Als Beispiel für Fluoride sind in der Beschreibung das Magnesiumfluorid MgF₂, das Lanthanfluorid LaF₃, das Aluminiumfluorid AIF₃ und das Cerfluorid CeF₃ genannt. Als verwendbare Oxide sind explizit Titanoxid, Aluminiumoxid, Zirkoniumoxid und Praseodymoxid angegeben. Als bevorzugte Dicke einer derartigen temporären Schutzschicht aus einem mineralischen Material sind Werte zwischen 1 und 50 nm angegeben. Als Alternative zu einer temporären Schutzschicht aus einem mineralischen Material schlägt das Dokument Tinten oder Harze, die das Bindemittel für Tinten darstellen, vor, und welche mit einem Tampon auf die Oberfläche des Brillenglases aufgedruckt werden. Harze vom Alkyd-Typ werden empfohlen. Als bevorzugte Dicke einer derartigen temporären Schutzschicht in Form einer Tinte oder eines Harzes sind Werte zwischen 5 und 150 µm angegeben.

Die WO 2004/110946 A1 beschreibt das Aufbringen einer 5 bis 50 nm dicken temporären Schutzschicht aus MgF₂. Um zu verhindern, dass diese Schutzschicht der Randbearbeitung nicht standhält, wenn diese nicht innerhalb von 48 Stunden durchgeführt wird, schlägt das Dokument eine Flüssigphasenbehandlung zur Erzeugung von MgO und/oder Mg(OH)₂ und die nachfolgende Abscheidung eines nicht-fluorinierten Metalloxids oder -hydroxids, insbesondere MgO und/oder Mg(OH)₂, vor.

Die EP 2 138 271 A1 beschreibt die Verwendung einer temporären Schutzschicht der in der o.a. WO 02/092524 A1 beschriebenen Art. Dieses Dokument empfiehlt die Abscheidung der temporären Schutzschicht auf die Hart- und Entspiegelungsbeschichtung, nachfolgende (a) Formgebung der der optisch fertig bearbeiteten Fläche gegenüberliegenden Fläche sowie (b) End- oder Formrandung zur Anpassung des Zylinderrandes an die das gebrauchsfertige Brillenglas aufnehmende Fassungsform, Abblocken und Entfernen der temporären Schutzschicht sowie finales Aufbringen einer Abschlussbeschichtung aus der Gruppe Hydrophob-, Oleophob- und Antistatikbeschichtung.

Die Verwendung einer Schutzfolie (Tape) anstelle einer temporären Schutzschicht entnimmt man der WO 80/02431 A1. Diese Schutzfolie ist ein anpassungsfähiges, mehrschichtiges Band. Die Schutzfolie umfasst eine polymere Trägerschicht, einen druckempfindlichen Kleber auf einer Hauptfläche und eine klebfreie Haftschicht auf der anderen Hauptfläche. Der Kleber ist eine Verbindung oder Zusammensetzung, die so beschaffen ist, dass sie trocken (lösungsmittelfrei), aggressiv und dauerhaft bei Raumtemperatur klebrig durch bloßen Kontakt mit dem Finger oder der Hand auf einem Substrat haftet. Die Schutzfolie ist anpassungsfähig oder anschmiegsam, das heißt, sie folgt der Krümmung der Brillenglasrohlinge ohne Falten, Luftblasen oder anderen Diskontinuitäten. Darüber hinaus ist die Schutzfolie vorzugsweise durchscheinend, das heißt, sie lässt Licht hindurch passieren. Die Schutzfolie soll aber bevorzugt nicht opak sein, kann aber gefärbt sein. Die beschriebene Schutzfolie hat ein 2% Sekanten-Modulus im Bereich von etwa 350 bis 2000 kg/cm², einen Scherwert von mindestens 500 Minuten, einen 180° Schälwert im Bereich zwischen 150 und 750 g/cm Breite, eine Bruchdehnung im Bereich zwischen 300 und 800 % und eine Überlappungsscherwert von mindestens 9 kg/cm². Die Schutzfolie soll vorzugsweise eine Zugfestigkeit bei 100 % Dehnung im Bereich von etwa 0,2 bis 4 kg/cm besitzen.

Eine Vielzahl von Klebstoffen ist nach dieser Druckschrift als Haftkleber geeignet. Dazu gehören Polyakrylat-Klebemassen, Naturkautschukklebstoffe und thermoplastische Gummiklebstoffe. Bevorzugt ist ein Kleber auf Polyakrylat-Basis.

Nach dem Auftragen der Schutzfolie auf die optisch fertig bearbeitete Fläche des Brillenglashalbfabrikats wird der abstehende Teil der Schutzfolie abgeschnitten (siehe Seite 13, Zeilen 20-21) und das Brillenglashalbfabrikat nachfolgend geblockt.

Die WO 97/10923 A1 beschreibt eine Schutzfolie, dort auch als Oberflächenschutzband oder Tape bezeichnet, der vorstehend beschriebenen Art. Die Schutzfolie ist anpassungsfähig, das heißt, sie folgt der Biegung der Brillenglasrohlinge ohne Falten oder Luftblasen. Außerdem ist die Schutzfolie vorzugsweise durchscheinend (das heißt, sie ist lichtdurchlässig) und bevorzugt auch optisch klar, so dass der Brillenglasrohling vor dem Blocken in der geeigneten Vorrichtung visuell ausgerichtet werden kann. Um die Sichtbarkeit zu verbessern sind Farbmittel (z.B. Farbstoffe und Pigmente) in der Schutzfolie. Außerdem hinterlässt die Schutzfolie praktisch keinen Klebstoffrückstand, wenn sie von dem Brillenglas entfernt wird. Die Schutzfolie umfasst eine polymere Trägerschicht, einen druckempfindlichen Kleber auf einer Hauptfläche und eine klebfreie Haftschicht auf der anderen Hauptfläche. Die Gesamtdicke des polymeren Trägers beträgt zwischen 0,01 und 0,25 mm. Nach dem Aufbringen wird überschüssiges Band vom Rand des Brillenglasrohlings abgeschnitten (siehe Seite 22, letzter Abschnitt). Dann wird der Brillenglasrohling geblockt.

Die WO 97/10924 A1 beschreibt ebenfalls eine Schutzfolie der in der WO 80/02431 A1 und der in der WO 97/10923 A1 beschriebenen Art.

Auch die JP 60135167 A2 beschreibt eine Schutzfolie für eine Linse. Die Schutzfolie umfasst einen transparenten oder opaken Harzfilm und kann ein- oder beidseitig mit einem Haftkleber versehen sein. Die Schutzfolie dient dem Schutz der Linse vor Beschädigung durch Markierungen, Führungslinien oder dergleichen, die auf die optische Mitte der Linse oder darum herum aufgebracht sind und vor Schäden durch einen auf die Mitte der Linse aufgesetzten Sauger. US 5 916 017 A offenbart einen Brillenglasrohling entsprechend dem Oberbegriff des Anspruchs 1 und ein Verfahren entsprechend dem Oberbegriff des Anspruchs 5. Es offenbart ebenfalls eine Schutzfolie zum Aufbringen auf eine bereits fertig bearbeitete Fläche eines Brillenglasrohlings, die mit einem Haftklebstoff versehen ist.

Die EP 0 285 490 A1 beschreibt eine Vorrichtung und ein Verfahren zum Aufbringen einer Schutzfolie der in den Dokumenten WO 80/02431 A1, WO 97/10923 A1, WO 97/10924 A1 beschriebenen Art auf die optisch fertig bearbeitete Fläche eines Brillenglashalbfabrikats. Das unter Verwendung der Vorrichtung beschriebene Verfahren umfasst die Schritte x₁) Anordnen eines Brillenglases auf einem Träger, x₂) Abwickeln einer Rolle eines Schutzfolienbands, das eine Klebefläche aufweist, und eines abziehbaren Streifens, der über der Klebefläche liegt, x₃) Trennens des abziehbaren Bandstreifens, x₄) Stanzen eines Lochs mit einem vorbestimmten Durchmesser, der größer als der des Brillenglases ist, in das von dem Klebeband getrennte Abziehband, x₅) Gruppieren des gestanzten Ablösebandes und des Klebebands derart, dass ein runder Teil davon entsteht und die Klebefläche des Klebebands durch das Loch des gestanzten Abziehstreifens frei bleibt, wobei x₆) das gestanzte Ablöseband und das Klebeband zwischen dem Träger und einem Stützkissen hindurchgeführt werden, wobei x₇) der freiliegende Abschnitt der Klebefläche des Klebebands auf einer Seite des Brillenglases aufgebracht wird durch relative Bewegung des Träger und des Kissens aufeinander zu, x₈) Abschneiden des Klebebands um die Umfangskante des Brillenglases herum, x₉) Evakuieren des Brillenglases mit dem ausgeschnittenen Abschnitt des Klebestreifens, so dass dieser an der Oberfläche des Brillenglases haftet und den Schutzfilm bildet, x₁₀) Evakuieren des verbleibenden ausgeschnittenen Abschnitts des Bandes und des gelochten Ablösebandes und nachfolgendes Wiederholen der Schritte x₁) bis x₁₀). Das derart mit einer Schutzfolie versehene Brillenglashalbfabrikat wird dann geblockt und das geblockte Brillenglashalbfabrikat den o.a. Bearbeitungsschritten (a) und (b) zugeführt.

Obwohl sich Schutzfolien der oben beschriebenen Art entsprechend der oben beschriebenen Applikation dem Grunde nach bewährt haben, besteht weiterer Verbesserungsbedarf. Insbesondere hat sich gezeigt, dass die optisch fertig bearbeitete Fläche des Brillenglasrohlings, insbesondere deren applizierte Funktionsschichten, nach Entfernen der Schutzfolie Beschädigungen aufweist bzw. wegen Haftungsproblemen zu Ablösungen und/oder Aufwerfungen /Falten) versagen.

Die Aufgabe der Erfindung besteht darin einen Brillenglasrohling, bei dem eine Schutzfolie auf einer optisch fertig bearbeitete Fläche appliziert ist, bereitzustellen, bei dem nach Entfernen der Schutzfolie das Auftreten von Beschädigungen reduziert ist. Eine weitere Aufgabe der Erfindung besteht darin, ein Herstellverfahren sowie eine entsprechende Herstellvorrichtung für ein Brillenglas bereitzustellen, bei dem von einem Brillenglasrohling mit optisch fertig bearbeiteter Fläche ausgegangen wird, auf die eine Schutzfolie appliziert wurde, bei dem das Auftreten von Beschädigungen der optisch fertig bearbeiteten Fläche, insbesondere von solchen mit Funktionsschichten, reduziert ist.

Diese Aufgabe wird durch einen Brillenglasrohling mit den Merkmalen des Patentanspruchs 1 und ein Verfahren mit den Merkmalen des Patentanspruchs 5 gelöst. Vorteilhafte Ausführungen und Weiterbildungen der Erfindung sind Gegenstand der Unteransprüche.

Die Erfindung geht von einem Brillenglasrohling mit einer optisch fertig bearbeiteten Fläche und einer Zylinderrandfläche und mit einer Schutzfolie auf der optisch fertig bearbeiteten Fläche aus. Ein Brillenglasrohling ist in diesem Zusammenhang entweder ein Halbfabrikat oder ein Fertigfabrikat. Der Brillenglasrohling kann also eine oder zwei optisch fertig bearbeitete Flächen aufweisen. Es kann also entweder die Vorderfläche des Brillenglasrohlings optisch fertig bearbeitet sein oder die Rückfläche oder beide Flächen, also Vorder- und Rückfläche. Eine optisch fertig bearbeitete Fläche ist in diesem Zusammenhang eine Fläche, die zumindest die endgültige Form aufweist. Sie kann, muss aber nicht, eine oder mehrere Funktionsschichten der in der Beschreibungseinleitung beschriebenen Art aufwiesen. Zu einem späteren Zeitpunkt können also noch eine oder mehrere Funktionsschichten appliziert werden. Häufig, insbesondere aus den in den in der Beschreibungseinleitung genannten Druckschriften beschriebenen Gründen ist die konvex gekrümmte Vorderfläche die optisch fertig bearbeitete Fläche. Unter Schutzfolie versteht man entsprechend der Beschreibungseinleitung eine Folie, die zumindest auf einer Seite eines Trägers aus Kunststoff oder dergleichen eine haftende Substanz aufweist, mit der diese Folie unter gewissem Druck mit den zuvor beschriebenen Brillenglasflächen lösbar verbindbar ist, so wie dies in den vorstehend genannten Druckschriften WO 80/02431 A1, WO 97/10923 A1, WO 97/10924 A1, EP 0 285 490 A1 und JP 60135167 A2 beschrieben ist. Die genannten Dokumente beschreiben eine Mehrzahl an Trägermaterialien. Der vorzugsweise aus einem polymeren Material bestehende Träger weist eine Gesamtdicke zwischen 0,01 und 0,25 mm auf. Die haftende Substanz umfasst einen Haftkleber. Eine Vielzahl von Klebstoffen ist nach den vorstehend angegebenen Druckschriften als Haftkleber geeignet. Dazu gehören Polyakrylat-Klebemassen, Naturkautschukklebstoffe und thermoplastische Gummiklebstoffe. Bevorzugt ist ein Kleber auf Polyakrylat-Basis. Die Schutzschicht soll die in der Beschreibungseinleitung genannten Anforderungen erfüllen. Insbesondere muss diese die Kräfte bei der Gegen- und Randflächenbearbeitung aufnehmen, die optisch fertig bearbeitete Fläche vor Verschmutzung schützen und sich rückstandsfrei wieder entfernen lassen.

Die Erfindung ist dadurch gekennzeichnet, dass die Schutzfolie nicht nur auf der optisch fertig bearbeiteten Fläche, sondern auch auf der Zylinderrandfläche angeordnet ist, und dass die Schutzfolie auf der der Vorderfläche des Brillenglasrohlings zugewandten Seite einen Haftkleber aufweist, der eine lösbare Verbindung zwischen Vorderfläche und Schutzfolie sowie zwischen Zylinderrandfläche und Schutzfolie bewirkt. Die Schutzfolie kann die optisch fertig bearbeitete Fläche vollumfänglich oder auch nur zu einem gewissen Flächenanteil überdecken. Dies gilt auch für die Zylinderrandfläche. Die Bedeckung zumindest eines Teils der Zylinderrandfläche mit der anhaftenden Schutzfolie, insbesondere im Übergangsbereich zwischen optisch fertig bearbeiteter Fläche und Zylinderrandfläche, verhindert, dass in den Funktionsschichtstapel oder in den "Zwischenraum" zwischen Schutzfolie und optisch fertig bearbeiteter Fläche Feuchtigkeit oder Umgebungsluft eindringen können, die sich beschädigungsverursachend oder -fördernd auswirken.

Es hat sich nämlich herausgestellt, dass die Haftung am "rohen" Zylinderrand signifikant besser ist, als auf der optisch wirksamen Vorder- oder Rückfläche des Brillenglases, weil die Oberflächenbeschaffenheit vom Abgießen aber teilweise auch Abzentrieren deutlich besser für diesen Zweck ist. Darüber hinaus ist die Grenzfläche "Ende der Schutzfolie (Tape) zu Atmosphäre" nicht auf der eine optische Wirkfläche darstellenden Front- oder Rückfläche ist. sondern beim bestimmungsgemäßen Gebrauch am optisch nicht genutzten Zylinderrand. Es hat sich gezeigt, dass wenn ein sogenannter Kleberestübertrag der Schutzfolie nach dem Ablösen der Schutzfolie vom Brillenglas(rohling) auftritt, dieser immer am Rand auf den ersten 0,5 bis 3 mm auftritt. Ist die Schutzfolie, wie nach dem Stand der Technik üblich, nur auf der optisch wirksamen Fläche aufgebracht, so befinden sich häufig Klebereste auf der optisch wirksamen Fläche. Überdeckt die Schutzfolie den Zylinderrand teilweise, so befindet sich die Grenzfläche am Zylinderrand und es befinden sich keine Klebereste auf der optisch wirksamen Vorder- (oder ggf. Rück)fläche.

Das entsprechende Verfahren zum Herstellen eines Brillenglases aus einem Brillenglasrohling mit einer optisch fertig bearbeiteten Fläche und einer Zylinderrandfläche, bei dem auf die optisch fertig bearbeitete Fläche eine Schutzfolie appliziert wird, ist erfindungsgemäß dadurch gekennzeichnet, dass die Schutzfolie auch auf die Zylinderrandfläche appliziert wird, und dass die Schutzfolie auf der der Vorderfläche des Brillenglasrohlings zugewandten Seite einen Haftkleber aufweist, der eine lösbare Verbindung zwischen Vorderfläche und Schutzfolie sowie zwischen Zylinderrandfläche und Schutzfolie bewirkt.

Eine geeignete Vorrichtung zum Herstellen eines Brillenglases aus einem Brillenglasrohling mit einer optisch fertig bearbeiteten Fläche und einer Zylinderrandfläche, bei dem auf die optisch fertig bearbeitete Fläche eine Schutzfolie appliziert wird, weist eine Applikationseinrichtung auf, um die Schutzfolie auch auf die Zylinderrandfläche zu applizieren. Die eingangs gestellte Aufgabe wird durch die vorstehend beschriebene erfindungsgemäße Maßnahme im Hinblick auf den Brillenglasrohling als auch im Hinblick auf das Herstellverfahren vollumfänglich gelöst.

Eine Ausführungsvariante der Erfindung sieht vor, dass die Schutzfolie längs des gesamten Umfangs der Zylinderrandfläche angeordnet ist. Anders ausgedrückt wird bei dem erfindungsgemäßen Herstellverfahren die Schutzfolie längs des gesamten Umfangs auf der Zylinderrandfläche appliziert. Der gesamte Übergangsbereich zwischen optisch fertig bearbeiteter Fläche und Zylinderrandfläche ist damit vor der beschädigungsverursachend oder - fördernd wirkenden Umgebung geschützt.

Eine Ausführungsvariante der Erfindung sieht vor, dass die Schutzfolie ausgehend von einer umlaufenden Grenzlinie, an der die Zylinderrandfläche an die optisch fertig bearbeitete Fläche grenzt, über ein Mindestmaß aus der nachfolgenden Gruppe:
(i) 0,5 mm
(ii) 1 mm
(iii) 2 mm
(iv) die Hälfte der Zylinderrandhöhe
(v) die gesamte Zylinderrandhöhe
auf der Zylinderrandfläche angeordnet ist. Das Herstellverfahren umfasst entsprechend dieser Ausführungsvariante den Verfahrensschritt, dass die Schutzfolie ausgehend von einer umlaufenden Grenzlinie, an der die Zylinderrandfläche an die optisch fertig bearbeitete Fläche grenzt, über ein Mindestmaß aus der nachfolgenden Gruppe:
(i) 0,5 mm
(ii) 1 mm
(iii) 2 mm
(iv) die Hälfte der Zylinderrandhöhe
(v) die gesamte Zylinderrandhöhe
auf der Zylinderrandfläche appliziert wird. Die Zylinderrandhöhe ist die Abmessung zwischen dem Außenberandung (Grenzlinie) der optisch fertig bearbeiteten Fläche, auf dem die Schutzfolie angebracht ist und dem Außenberandung (Grenzlinie) der dieser gegenüberliegenden Gegenfläche. Da die Schutzfolie regelmäßig auf der konvexen Vorderfläche aufgebracht wird, ist die Gegenfläche die Rückfläche. Eine Applikation über die gesamte Zylinderrandhöhe bedeutet, dass der Zylinderrand vollständig mit der Schutzfolie versehen ist. Ein Mindestmaß von 0,5 mm hat sich als vorteilhaft herausgestellt, um eine lösbare aber dauerhafte Verbindung zwischen Schutzfolie und Zylinderrand herzustellen. Geringere Mindestmaße können zu selbstständigem Ablösen der Schutzfolie aufgrund deren begrenzten Elastizität führen.

Die Haftung am "rohen" Zylinderrand -wie oben bereits ausgeführt wurde- signifikant besser, weil die Oberflächenbeschaffenheit vom Abgießen aber teilweise auch Abzentrieren deutlich besser ist. Die Grenzfläche "Ende des Tapes zu Atmosphäre" nicht auf der optischen Wirkfläche ist, sondern auch am Zylinderrand. Es hat sich gezeigt, dass wenn es Kleberestübertrag der Folie gibt dann immer am Rand auf die ersten 0,5 bis 3 mm. Wenn die Grenzfläche am Rand ist, gibt es keine Klebereste auf der optischen Wirkfläche.

Eine weitere Ausführungsvariante der Erfindung besteht darin, dass die Schutzfolie eine temporäre Markierung aufweist. Eine temporäre Markierung bedeutet, dass sie mit Hilfe eines Lösungsmittels durch manuelles Wischen entfernbar ist, ohne die Schutzwirkung der Schutzfolie selbst für die darunter liegende Oberfläche des Brillenglasrohlings zu beeinträchtigen. Eine temporäre Markierung ist insbesondere eine Markierung in Form einer Stempelung im Sinne des Abschnitts 14.2.13 der DIN EN ISO 13666:2013-10.

Um eine falten-, blasen- und diskontinuitätsfreie Verbindung zwischen der Schutzfolie und der optisch fertig bearbeiteten Fläche sowie der Zylinderrandfläche herzustellen, hat es sich in einer besonders vorteilhaften Ausführungsvariante des erfindungsgemäßen Verfahrens als günstig herausgestellt, wenn die Schutzfolie bei gegenüber Raumtemperatur erhöhter Temperatur auf die optisch fertig bearbeitete Fläche und die Zylinderrandfläche appliziert wird. Insbesondere die nachfolgend angegebenen Temperaturbereiche haben sich als empfehlenswert herausgestellt: Applikation der Schutzfolie bei einer Temperatur der Schutzfolie aus der Gruppe:
(i) zwischen 450°C und 85°C
(ii) zwischen 50°C und 80°C
(iii) zwischen 55°C und 75°C
(iv) zwischen 60°C und 70°C
(v) zwischen 62°C und 68°C
(vi) zwischen 64°C und 66 °C
auf die optisch fertig bearbeitete Fläche und die Zylinderrandfläche. Die Herstellung einer faltensowie blasen- und diskontinuitätsfreien Verbindung zwischen der Schutzfolie und der optisch fertig bearbeiteten Fläche sowie der Zylinderrandfläche erfordert nämlich eine hinreichende Elastizität des Trägers der Schutzfolie, um sich an die festen Oberflächen des Brillenglasrohlings anschmiegen zu können. Zur Erreichung diese Elastizität ist eine Erhöhung der Temperatur der Schutzfolie gegenüber der umgebenden Raumtemperatur erforderlich. Die gewählte Temperatur darf jedoch weder zur Zerstörung der Schutzfolie noch zur Zerstörung des Brillenglasrohlings führen. Es hat sich gezeigt, dass Temperaturen um 60°C beiden Anforderungen am besten genügen. Die Temperaturerhöhung der Schutzfolie kann z.B. mit Hilfe eines Heizluftgebläses durchgeführt werden, welches die Schutzfolie im Bereich der Applikationsfläche erwärmt. Das Heiz- oder Warmluftgebläse kann einseitig oder beidseitig der Schutzfolie angeordnet sein. Eine Erwärmung durch das Heiz- oder Warmluftgebläse kann demnach nur von der der Brillenglasoberfläche abgewandten Seite der Schutzfolie, von der der Brillenglasoberfläche zugewandten Seite oder von beiden Seiten erfolgen. Alternativ ist es auch möglich, einen Heizstrahler, z.B. einen Infrarotstrahler einzusetzen, welcher auf der der Brillenglasoberfläche abgewandten Seite der Schutzfolie angeordnet ist. Soweit die Schutzfolie von einem Band abgerollt und auf den Brillenglasflächen appliziert und zugeschnitten wird, wie dies z.B. in der EP 0 285 490 A1 beschrieben ist, genügt die lokale Erwärmung im Bereich der Applikationsfläche.

In besonderer Ausgestaltung dieser Variante ist es hilfreich, wenn die Schutzfolie auf die optisch fertig bearbeitete Fläche und die Zylinderrandfläche mit Hilfe eines mechanischen Formteils appliziert wird. Ein derartiges mechanisches Formteil kann ein Stempel sein, wie dies z.B. in der EP 0 285 490 A1 beschrieben ist. Der Stempel kann eine hohlzylinderförmige Gestalt aufweisen, die komplementär zur Oberflächengeometrie der Brillenglasflächen ausgebildet ist, auf die die Schutzfolie appliziert wird. Insgesamt kann die Applikationseinrichtung identisch oder ähnlich zu der in der EP 0 285 490 A1 beschriebenen und dort in den Figuren dargestellten Apparatur ausgebildet sein. Es ist auch möglich, dass die Applikationseinrichtung in der Art einer Rolle ausgebildet ist, die rollend über die Brillenglasoberflächen geführt wird. Die Rolle kann z.B. auf einer starren Achse drehbar gelagert sein. Die Rolle kann eine elastisch nachgiebige Oberfläche ähnlich einem Schwamm oder einem Gummi aufweisen.

Eine weitere Ausführungsvariante des erfindungsgemäßen Verfahrens besteht darin, dass die Schutzfolie mit Hilfe eines atmosphärischen Unterdrucks zwischen Schutzfolie und optisch fertig bearbeiteter Fläche und/oder Zylinderrandfläche appliziert wird. Unter atmosphärischem Unterdruck soll im Rahmen der vorliegenden Erfindung ein Luft- oder Umgebungsgasdruck unter dem natürlichen Luftdruck verstanden werden, welcher in etwa 1013 hPa entspricht. Durch diese Maßnahme wird erreicht, dass sich die erwärmte Schutzfolie falten-, blasen- und diskontinuitätsfrei an die Brillenglasoberflächen anschmiegt.

Eine falten-, blasen- und diskontinuitätsfreie Applikation der Schutzfolie ist bei einem Druck im Bereich zwischen (i) 10 und 1000 hPa möglich. Bevorzugte Druckbereiche in der Reihenfolge zunehmender Bevorzugung sind
(ii) zwischen 100 und 900 hPa
(iii) zwischen 200 und 800 hPa
(iv) zwischen 300 und 700 hPa
(v) zwischen 400 und 600 hPa.
Ein Unterdruck auf der Brillenglasseite der Schutzfolie gegenüber der der Brillenglasseite gegenüber liegenden Seite der Schutzfolie lässt sich mit handelsüblichen Vakuumpumpen herstellen.

Um Verschmutzungen und insbesondere das Anhaften unerwünschter Substanzen durch Kontakt der optisch fertig bearbeiteten Oberfläche und des applizierten Funktionsschichtstapels mit der Umgebungsatmosphäre zu verhindern oder zumindest zu reduzieren, hat es sich als vorteilhaft herausgestellt, die Schutzfolie innerhalb eines Zeitraums aus der Gruppe:
(i) weniger als 72 Stunden
(ii) weniger als 48 Stunden
(iii) weniger als 24 Stunden
(iv) weniger als 12 Stunden
(v) weniger als 6 Stunden
(vi) weniger als 3 Stunden
(vii) weniger als 1 Stunde
(viii) weniger als 30 Minuten
nach Fertigstellen der optisch fertig bearbeiteten Fläche zu applizieren. Die angegebenen Zeitdauern sind wiederum in der Reihenfolge zunehmender Bevorzugung angegeben, wobei die klimatischen Bedingungen und insbesondere auch jahreszeitliche Schwankungen zu berücksichtigen sind.

Nach dem Stand der Technik ist es allgemein üblich, Kunststoffhalbfabrikate nach dem Abgießen in eine Kunststoffschale abzulegen und diese dann in eine Faltschachtel zu verpacken. Alternativ ist es nach dem Stand der Technik auch bekannt, Kunststoffhalbfabrikate in ein weiches tuch- oder packpapierartiges Kunststoffstück einzuwickeln, oder in eine geschäumte Kunststofffolie (sog. "foam wrap") oder einen Plastik-Tiefzieheinsatz (sog. "plastic cup"), bevor diese in die Faltschachtel verpackt werden. Die Halbfabrikate werden dann derart verpackt zu den Rezeptwerkstätten versandt. Dieser Vorgang ist zeit- und personalintensiv und verursacht damit nicht zu vernachlässigende Kosten. Die Erfindung sieht daher vor, den Brillenglasrohling mit der applizierten Schutzfolie direkt ohne weiteres Verpackungsmaterial insbesondere in einer Umverpackung z.B. Faltschachtel, Röhre, Tiefziehschale zu verpacken und sich die oben angegebenen zusätzlichen Einhüllschritte zu sparen.

Der derart verpackte Brillenglasrohling mit bereits applizierter Schutzfolie wird erfindungsgemäß vorteilhafterweise dann versandt.

In konsequenter Weise ist es dann vorteilhaft, wenn der derart verpackte Brillenglasrohling nach Erreichen seiner Zieldestination (z.B. in der Rezeptwerkstätte) ausgepackt wird, dass der ausgepackte Brillenglasrohling (z.B. in der Rezeptwerkstätte) auf der Schutzfolie geblockt wird und/oder (z.B. in der Rezeptwerkstätte oder bereits am Herstellort des Halbfabrikats) mit einer temporären Markierung versehen wird.

In weiterer vorteilhafter Ausgestaltung des erfindungsgemäßen Verfahrens ist vorgesehen, dass der geblockte Brillenglasrohling wenigstens einem Bearbeitungsschritt aus der nachfolgenden Gruppe unterzogen wird, nämlich:
(i) Formgeben der der optisch fertig bearbeiteten Fläche gegenüberliegenden Fläche
(ii) Aufbringen wenigstens einer Funktionsschicht auf die gegenüberliegende formgebend bearbeiteten Fläche
(iii) Aufbringen einer temporären Markierung auf die Schutzfolie
(iv) Aufbringen eines Identifikations-Codes
(v) End- oder Formranden der Zylinderrandfläche zur Anpassung des Zylinderrandes an eine ein gebrauchsfertiges Brillenglas aufnehmende Fassungsform,
(vi) Abblocken
(vii) Entfernen der Schutzfolie
(viii) Aufbringen wenigstens einer Funktionsschicht auf die optisch fertig bearbeitete Fläche nach Entfernen der Schutzfolie.

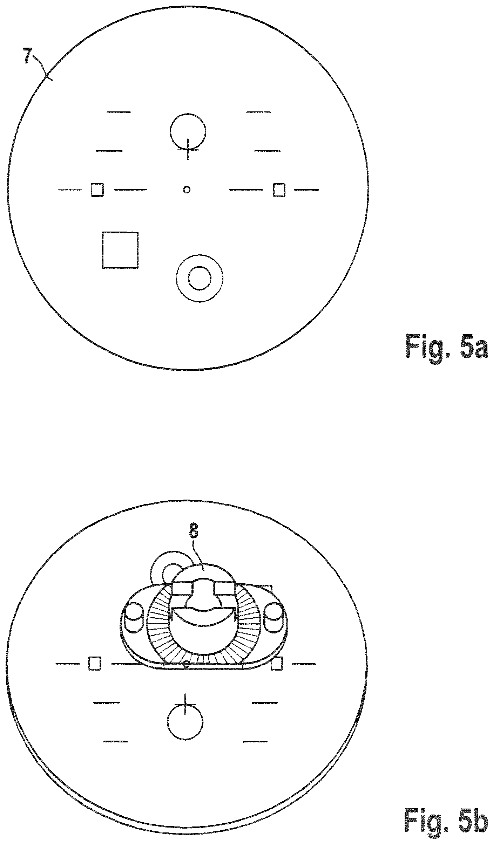

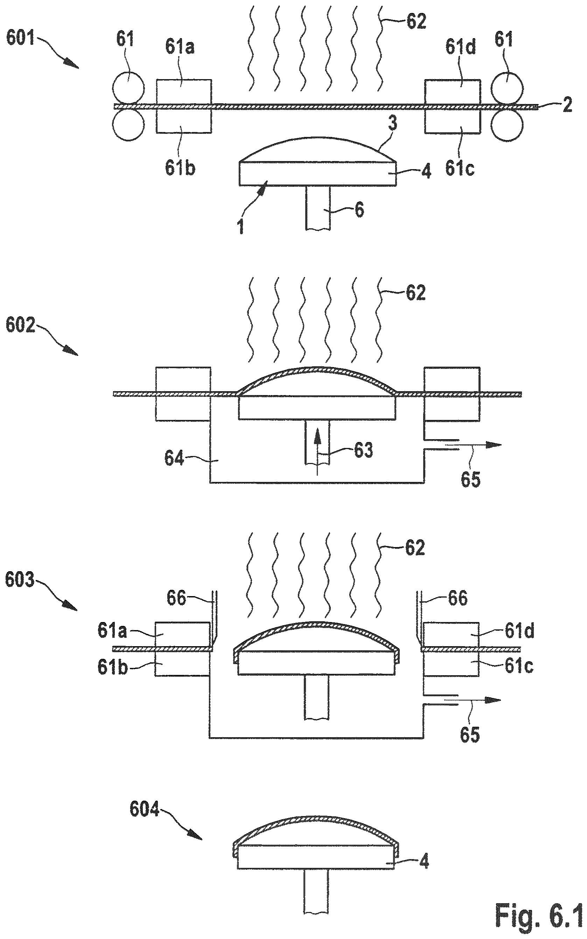

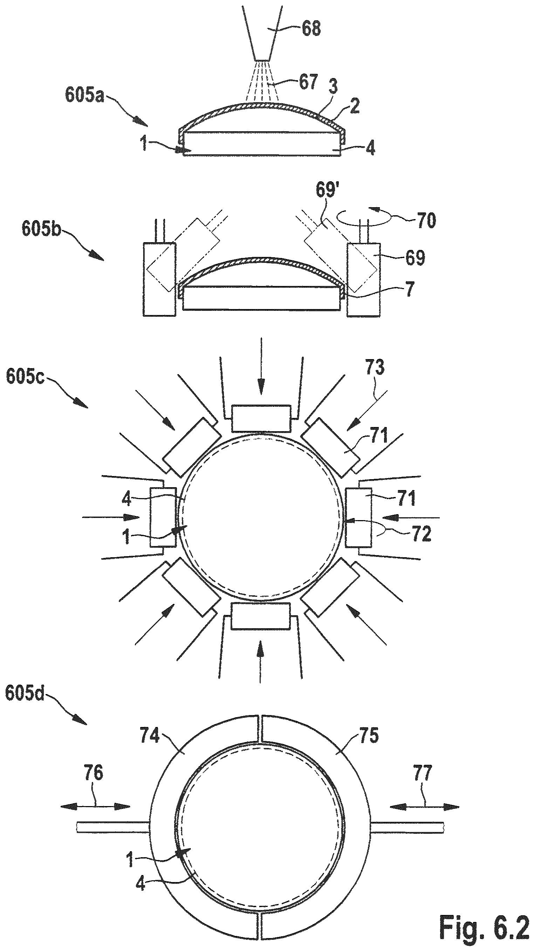

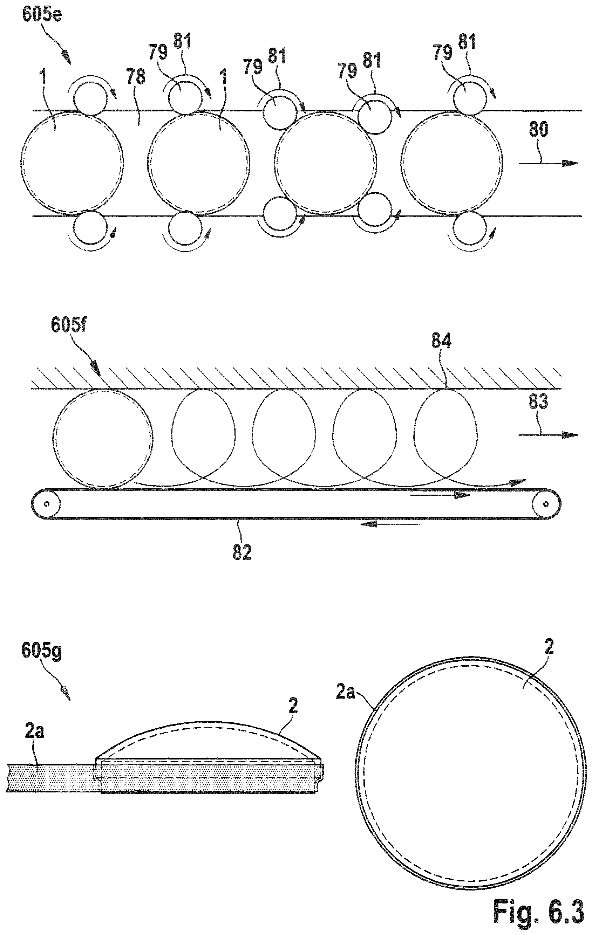

Die Erfindung wird nachfolgend anhand der Zeichnung näher beschrieben. Es zeigen:
- Figur 1: Herstellung eines Brillenglases
a) Prozessschritte nach dem Stand der Technik
b) Wickelverpackung
c) Schalenverpackung
d) Prozessschritte nach der Erfindung
e) Faltschachtelverpackung eines Brillenglasrohlings mit Schutzfolie nach der Erfindung
- Figur 2: Erfindungsgemäßes Applizieren einer Schutzfolie auf einem Brillenglasrohling
- Figur 3: Applikationseinrichtung in Form einer Rolle mit schwammartiger Schaumstoffoberfläche
a) Applizieren der Schutzfolie auf der optisch fertig bearbeiteten Fläche eines Brillenglasrohlings
b) Applizieren der Schutzfolie auf der Zylinderrandfläche des Brillenglasrohlings
- Figur 4: Brillenglasrohling mit erfindungsgemäß applizierter Schutzfolie
a) Querschnitt eines Brillenglasrohlings mit auf einer optisch fertig bearbeiteter Fläche und auf Zylinderrandfläche applizierter Schutzfolie
b) Perspektivische Darstellung eines Brillenglasrohlings, bei dem die Schutzfolie bei einer Temperatur von 40°C appliziert wurde
c) Perspektivische Darstellung eines Brillenglasrohlings, bei dem die Schutzfolie bei einer Temperatur von 60-70°C appliziert wurde
- Figur 5: Brillenglasrohling mit erfindungsgemäß applizierter Schutzfolie
a) Perspektivische Darstellung eines Brillenglasrohlings mit erfindungsgemäß applizierter Schutzfolie und mit Hilfe eines Tintenstrahldruckers aufgebrachten Zentrier- und Einschleifmarkierungen
b) Perspektivische Darstellung eines Brillenglasrohlings mit erfindungsgemäß applizierter Schutzfolie und mit Hilfe eines Tintenstrahldruckers aufgebrachten Zentrier- und Einschleifmarkierungen und aufgesetztem Blockstück
- Figur 6: ein Ausführungsbeispiel eines erfindungsgemäßen Applizierens einer Schutzfolie als Bestandteil eines Verfahrens zum Herstellen eines Brillenglases aus einem Brillenglasrohling mit einer optisch fertig bearbeiteten Fläche und einer Zylinderrandfläche.

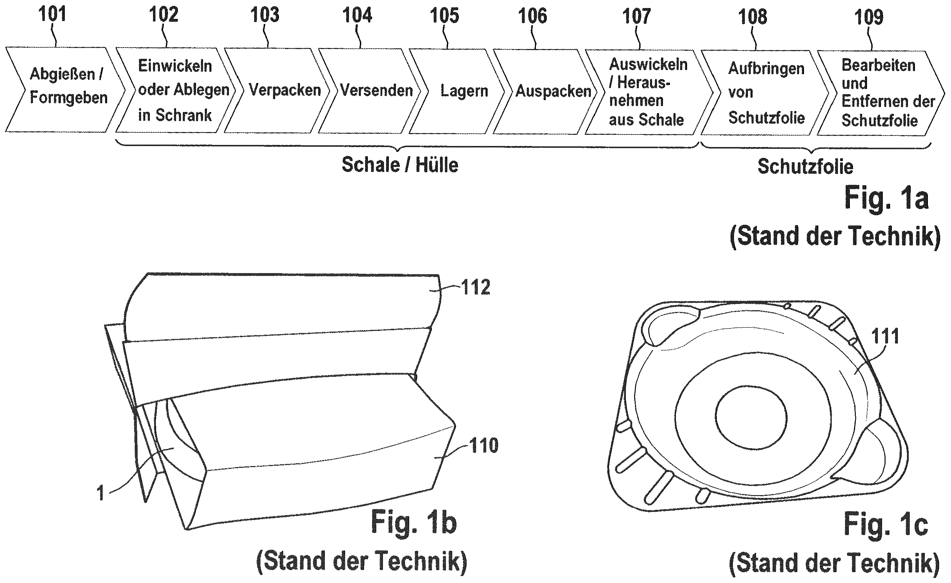

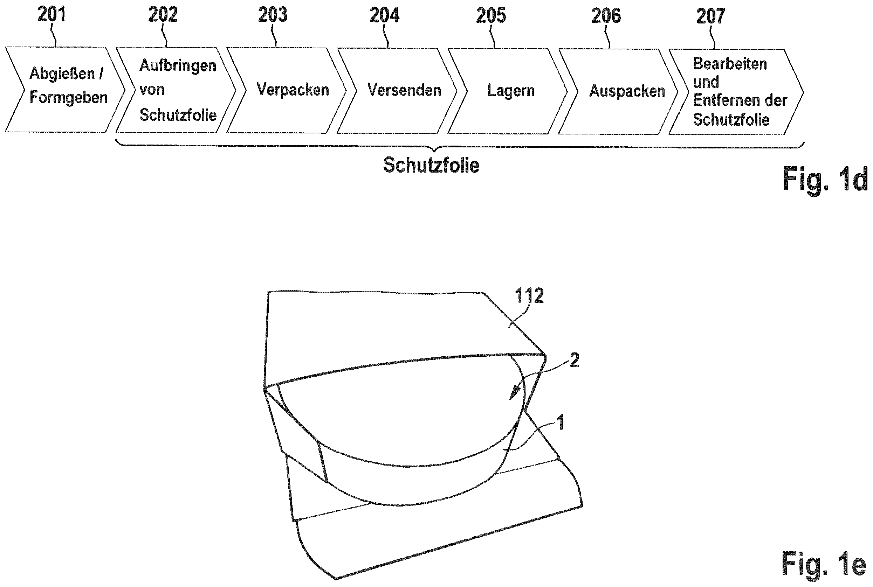

Die Figur 1 zeigt die Herstellung eines Brillenglases nach dem Stand der Technik im Vergleich zur Herstellung eines Brillenglases nach der Erfindung. Die Figur 1a) zeigt die typischen Prozessschritte des Herstellverfahrens nach dem Stand der Technik. In einem ersten Schritt 101 wird ein Halbfabrikat 1 abgegossen. Die konvexe Vorderfläche hat regelmäßig bereits seine optisch fertige Oberflächengeometrie. Es können diverse Funktionsschichten aufgebracht werden, wie dies bereits in der Beschreibungseinleitung beschrieben ist. Danach wird in einem Schritt 102 das Halbfabrikat 1 entweder mit einer Wickelfolie 110 der in der Figur 1b) gezeigten Art eingewickelt oder in eine Kunststoffschale 111 der in der Figur 1c) gezeigten Art eingelegt. Nach dem Einwickeln oder Einlegen folgt die Verpackung in einer Faltschachtel 112 in einem Schritt 103. Es erfolgt dann ein Versand vom Ort des Abgießens z.B. zu einer Rezeptwerkstätte (Schritt 104). Dort wird die Faltschachtel 112 mit dem Brillenglasrohling 1 gelagert (Schritt 105), bis es für die Weiterverarbeitung gebraucht wird. Dann erfolgt in einem Schritt 106 ein Entpacken aus der Faltschachtel 112 sowie in einem weiteren Schritt 107 das Auswickeln oder die Entnahme aus der Kunststoffschale 111. Nach dem Stand der Technik wird dann in einem weiteren Schritt 108 eine Schutzfolie 2 der in der Beschreibungseinleitung im Detail beschriebenen Art appliziert. Dann erfolgt die Bearbeitung der zur optisch fertig bearbeiteten Fläche gegenüberliegende (Rezept-)Fläche und die Randbearbeitung entsprechend den in der Beschreibungseinleitung angegebenen Prozessschritten (a) und (b). Die Dauer, während der die Schutzfolie auf dem Halbfabrikat appliziert ist, beträgt regelmäßig zwischen 0,1 und 2 Stunden.

Vergleichend zur Darstellung nach der Figur 1a) zeigt die Figur 1d) die Prozessschritte des Herstellverfahrens nach der Erfindung. Es finden sich die Prozessschritte 101, 103, 104, 105 und 106 sowie 109 in entsprechender Weise wieder. Diese Prozessschritte sind in der Figur 1d) durch die Bezugszeichen 201, 203, 204, 205 und 206 sowie 207. Der Prozessschritt 102 als solcher entfällt bei dem Herstellverfahren nach der Erfindung. Der Prozessschritt 108 erfolgt (in erfindungsgemäß modifizierter Form, wie nachfolgend beschrieben) in der zeitlichen Reihenfolge anstelle des Prozessschritts 102 und ist in der Figur 1d) daher mit dem Bezugszeichen 202 gekennzeichnet.

Der Zustand des Brillenglasrohlings 1 in der Faltschachtel 112 im Prozessschritt 203 ist in der Figur 1f) dargestellt. Die Faltschachtelverpackung umfasst hier also einen Brillenglasrohling 1 mit Schutzfolie 2 nach der Erfindung.

Die Dauer, während der die Schutzfolie 2 auf dem Halbfabrikat 1 appliziert ist, beträgt bei dem erfindungsgemäßen Verfahren zwischen einem Tag und ggf. mehreren Wochen, bis zu 6 Monaten bei sogenannten Freiformbrillenglashalbfabrikaten, bis zu einem Jahr bei abgegossenen Gleitsicht-Halbfertigfabrikaten. Kommerziell erhältliche Schutzfolien, wie z.B. DAC Vision ST-4004, Satisloh Superstick, Lohmann DuploColl 21393 und VigTeQnos Z-6294 lassen sich selbst nach dieser vergleichsweise langen Applikationsverweildauer wieder problemlos entfernen.

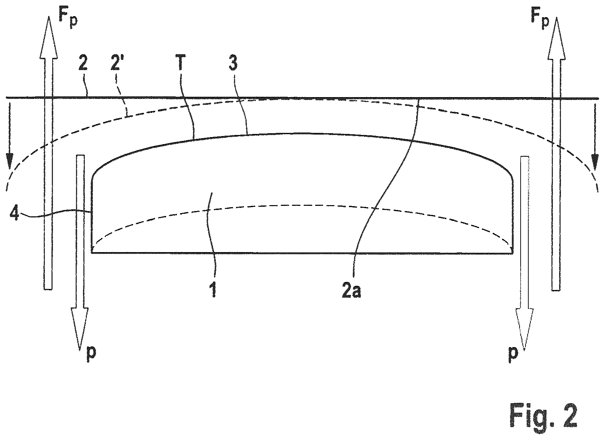

Die Figur 2 zeigt eine Vorrichtung und ein Verfahren zum erfindungsgemäßen Applizieren einer Schutzfolie 2 auf einem Brillenglasrohling 1, insbesondere einem Halbfabrikat 1. Die Schutzfolie 2 wird relativ zu dem Halbfabrikat 1 in Richtung dessen optisch fertig bearbeiteter Vorderfläche 3 bewegt. Gleichzeitig wird der Bereich zwischen Vorderfläche 3 und Schutzfolie 2 evakuiert, was mit dem Symbol p gekennzeichnet ist. p bezeichnet einen (Unter-)Druck gegenüber dem oberhalb der Schutzfolie 2 herrschenden Atmosphärendruck. Dadurch entsteht eine Druckkraft Fₚ, welche die Schutzfolie 2 auf die Vorderfläche 3 des Halbfabrikats 1 drückt. Durch eine erhöhte Temperatur T von etwa 60 °C-70 °C der Halbfabrikatvorderfläche 3 und/oder der Schutzfolie 2 im Bereich der Applikationsfläche und die wirkende Druckkraft Fₚ wird erreicht, dass sich die Schutzfolie 2 plastisch verformt und falten-, blasen- und diskontinuitätsfrei an die Halbfabrikatvorderfläche 3 und die Zylinderrandfläche 4 anschmiegt. Die plastische Verformung der Schutzfolie 2 ist in der Zeichnung mit dem Bezugszeichen 2' angedeutet. Der Haftkleber 2a auf der der Vorderfläche 3 des Halbfabrikats 1 zugewandten Seite der Schutzfolie 2 sorgt für eine lösbare Verbindung zwischen Halbfabrikatvorderfläche 3 und Schutzfolie 2 sowie zwischen die Zylinderrandfläche 4 und Schutzfolie 2.

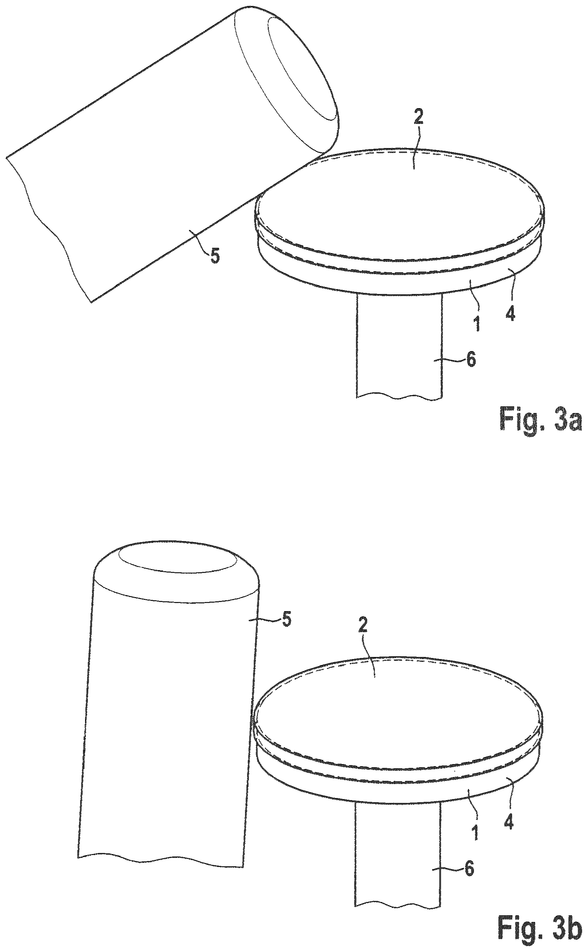

Zur Erzeugung einer vollflächigen Falten- und Blasenfreiheit kann eine Rolle 5 unter Kraftbeaufschlagung auf der Schutzfolie 2 aufliegend über die Vorderfläche 3 und die Zylinderrandfläche 4 des auf einem Halter 6 aufliegenden Halbfabrikats 1 geführt werden, wie dies in den Figuren 3a) und 3b) gezeigt ist. Die Figur 3 zeigt nämlich eine erfindungsgemäße Applikationseinrichtung in Form einer Rolle 5 mit schwammartiger Schaumstoffoberfläche, wobei der Figurenteil a) das Applizieren der Schutzfolie 2 auf der optisch fertig bearbeiteten Fläche 3 des Brillenglasrohlings 1 und Figurenteil b) das Applizieren der Schutzfolie 2 auf der Zylinderrandfläche 4 des Brillenglasrohlings 1 zeigt.

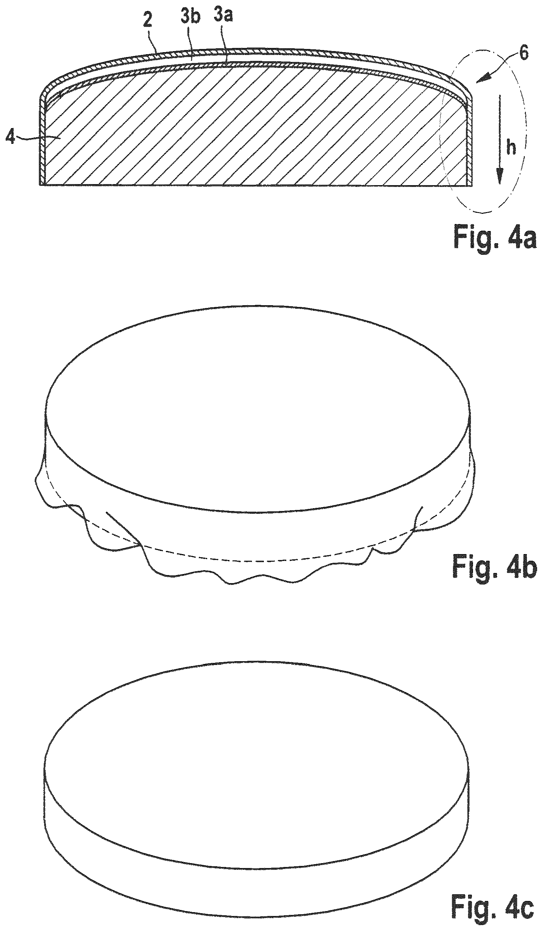

Der Figur 4a) entnimmt man einen Brillenglasrohling 1 mit erfindungsgemäß applizierter Schutzfolie 2 im Querschnitt. Die Schutzfolie 2 ist vollumfänglich auf der optisch fertig bearbeiteten Fläche 3 des Brillenglasrohlings 1 und über deren gesamten Höhenerstreckung h auf der Zylinderrandfläche 4 applizierter Schutzfolie 2. Der Figur 4a) entnimmt man, dass die optisch fertig bearbeitete Fläche 3 sogenannte Funktionsschichten 3a und 3b trägt. Im Beispiel sollen 3a auf die Existenz einer Hartbeschichtung und 3b auf das Vorliegen einer Entspiegelungsschicht hinweisen. Obwohl im gezeigten Beispiel die gesamte Zylinderrandfläche 4 mit der Schutzfolie 2 bedeckt ist, muss dies nach der Erfindung nicht zwangsläufig so sein. Es kann insbesondere auch nur ausgehend von einer umlaufenden Grenzlinie 6 zwischen den Flächen 3 und 4 bis zu einer Teilhöhe ht von z.B. etwa 1 mm eine anhaftende Bedeckung durch die Schutzfolie 2 vorliegen.

Der Figur 4b) entnimmt man eine nichtschematische perspektivische Darstellung eines Brillenglasrohlings 1, bei dem die Schutzfolie 2 bei einer Temperatur von 40 °C appliziert wurde. Zum Vergleich zeigt die Figur 4c) eine perspektivische Darstellung eines Brillenglasrohlings 1, bei dem die Schutzfolie 2 bei einer Temperatur von 60 -70°C appliziert wurde. Während die bei 60 -70°C applizierte Schutzfolie 2 sowohl im Zylinderrandbereich 4 als auch auf der Vorderfläche 3 blasen-, falten- und diskontinuitätsfrei ist, zeigt die Schutzfolie 2, die bei niedrigerer Temperatur appliziert wurde besonders im Zylinderrandbereich 4 Falten.

Die Figur 5 zeigt Brillenglasrohlinge mit erfindungsgemäß applizierter Schutzfolie. Der in Figur 5a) gezeigten perspektivischen Darstellung eines Brillenglasrohlings mit erfindungsgemäß applizierter Schutzfolie entnimmt man mit Hilfe eines Tintenstrahldruckers aufgebrachte Zentrier- und Einschleifmarkierungen 7. Die perspektivische Darstellung zeigt einen Brillenglasrohling mit erfindungsgemäß applizierter Schutzfolie und mit Hilfe eines Tintenstrahldruckers aufgebrachten Zentrier- und Einschleifmarkierungen sowie aufgesetztem Blockstück 8.

Die Figur 6 zeigt ein Ausführungsbeispiel für ein erfindungsgemäßes Applizieren einer Schutzfolie 2 beim Herstellen eines Brillenglases aus einem Brillenglasrohling 1 mit einer optisch fertig bearbeiteten Fläche 3 und einer Zylinderrandfläche 4.

Der Applizier- oder Tapingprozess umfasst folgende Verfahrensschritte: In einem ersten Verfahrensschritt 601 wird die Schutzfolie 2 in Form eines Bandes über einen Rollenförderer 61 mit mehreren Halteeinrichtungen 61a, 61b, 61c, 61d zugeführt. Im Bereich des Brillenglasrohlings 1 wird die Schutzfolie 2 auf etwa 60-70 °C erwärmt, was in der Figur 6 mit dem Bezugszeichen 62 kenntlich gemacht ist.

Ein Hubmechanismus 63 hebt den Halter 6 und damit den Brillenglasrohling 1 in einem weiteren Arbeitsschritt 602 an, so dass dieser mit seiner fertig bearbeiteten Fläche 3 in Kontakt mit der mit einer klebenden Substanz aufweisenden Seite der Schutzfolie 2 tritt, so dass diese sich an die fertig bearbeitete Fläche 3 glatt anschmiegt. Ein glattes Anschmiegen an die fertig bearbeitete Fläche 3 unterstützend und ein Bilden von Lufteinschlüssen zwischen Schutzfolie 2 und Fläche 3 verhindernd wird der Raum 64 zwischen Schutzfolie 2 und Fläche 3 mit einem Vakuum 65 beaufschlagt.

Klingen 66 trennen die Schutzfolie 2 im Bereich der Halteeinrichtungen 61a, 61b, 61c, 61d ab. Aufgrund von Schwerkraft und Vakuum 65 legt sich die Schutzfolie 2 auch an die Zylinderrandfläche 4 des Brillenglasrohlings 1 an (Verfahrensschritt 603).

Um auch im Bereich der Zylinderrandfläche 4 ein blasenfreies Anliegen der Schutzfolie 2 zu erreichen, wie dies in dem Prozessschritt 604 angedeutet ist, sind Maßnahmen erforderlich, welche wahlweise durch wenigstens einen der Teilschritte 605a bis 605g in der Figur 6 erfolgen können.

Es wird in dem Teilschritt 605a die klebstofffreie Oberfläche der Schutzfolie 2 über eine oder mehrere Druckluftdüsen 68 mit Druckluft 67 beaufschlagt. Dadurch wird die Schutzfolie 2 auf die Wirkfläche 3 und die Zylinderrandfläche 4 aufgepresst.

Über eine oder mehrere rotierend angetriebene (das Bezugszeichen 70 gibt die Drehbewegung an) Walzen 69, dessen Anstellwinkel im Beispiel über einen Bereich zwischen 45° und 90° variiert werden kann, wird die Schutzfolie 2 im Bereich der umlaufenden Kante 9 an die Wirkfläche 3 und die Zylinderrandfläche 4 angedrückt. Das Bezugszeichen 69 zeigt die Walzen mit einem Anstellwinkel von 90°, das Bezugszeichen 69'zeigt die Walzen mit einem Anstellwinkel von 45°. Die Bewegung der Walzen 69 erfolgt hier stets in radialer Richtung bezüglich der Mittenachse des Brillenglasrohlings 1.

In Prozessteilschritt 605c werden Walzen 71 in axialer Richtung bezüglich der Mittenachse des Brillenglasrohlings 1 längs der Zylinderrandfläche 4 rotierend geführt (Rotationsrichtung 72) und dabei an diese angedrückt (Druckrichtung 73).

In Prozessteilschritt 605d werden zwei Halbschalen 74, 75 formschlüssig die Zylinderrandfläche 4 umschließend zusammengepresst (Bezugszeichen 76, 77). Gleichzeitig kann eine Heißluft- und/oder Ultraschallbeaufschlagung der Zylinderrandfläche 4 erfolgen, was zu einer blasen- und diskontinuitätsfreien Anlage und Verklebung der Schutzfolie 2 mit der Zylinderrandfläche 4 führt.

Teilprozessschritt 605e zeigt eine Variante, bei der der Brillenglasrohling 1 auf einem Bandförderer 78 in Richtung 80 geführt wird. Die Zylinderrandfläche 4 des Brillenglasrohlings 1 tritt beim Transport in Richtung 80 mit Walzen 79 in Kontakt, die auf der Zylinderrandfläche 4 des Brillenglasrohlings 1 abrollen (Rotationsrichtung 81), was zu einer blasen- und diskontinuitätsfreien Anlage und Verklebung der Schutzfolie 2 mit der Zylinderrandfläche 4 führt.

Teilprozessschritt 605f zeigt eine ähnliche Variante, bei der der Brillenglasrohling 1 ebenfalls auf einem Bandförderer 82 in Richtung 83 geführt wird. Bei dieser Variante liegt der Brillenglasrohling 1 nicht mit der der fertig bearbeiteten Fläche 3 gegenüberliegenden Seite auf dem Band des Bandförderers auf, wie bei der Variante nach 605e, sondern mit der Zylinderrandfläche 4. Eine dem Laufband des Bandförderers 82 dem Brillenglasrohling gegenüberliegende Wandfläche 84 dient beim Transport in Richtung 83 als Anlagefläche und sorgt zusammen mit der Laufbandfläche für ein Anpressen der Schutzfolie an die Zylinderrandfläche 4. Gleichzeitig kann eine Heißluft- und/oder Ultraschallbeaufschlagung der Zylinderrandfläche 4 erfolgen, was zu einer blasen- und diskontinuitätsfreien Anlage und Verklebung der Schutzfolie 2 mit der Zylinderrandfläche 4 führt.

Teilprozessschritt 605g zeigt das Aufbringen einer zweiten Schutzfolie 2a auf die Schutzfolie 2 im Bereich der Zylinderrandfläche 4 des Brillenglasrohlings 1, was in einem wasserdichten Verschluss resultiert.

Die vorteilhafteste Ausführung der erfindungsgemäßen Idee wird wie folgt zusammengefasst:
- Die "warme Applikation" der Schutzfolie bei ca. 60 - 70° C Oberflächentemperatur ist empfehlenswert. Für bestmögliche Ergebnisse wird ein Gerät mit einstellbarer Temperatur, Vakuum, Substratdruck gegen Schutzfolie, Substratbewegung und Applikationsdauer benötigt.
- Da die zuvor genannten kommerziell erhältlichen Schutzfolien Acrylklebstoffe haben, sind sie alle empfindlich gegenüber Luftfeuchtigkeit. Die Lagerung von mit Schutzfolien versehenen Halbfabrikaten unter "heißen und feuchten" Bedingungen für eine lange Zeit (bis zu einem Jahr) kann zu einer verringerten Adhäsionsleistung führen. Deswegen ist eine bevorzugte Weiterbearbeitung innerhalb weniger Monate empfehlenswert.
- Die Flächenbearbeitung (Gegenfläche und Zylinderrandfläche) ist bei Basiskurven zwischen BC 0,5 bis 10 nach dem oben vorgestellten Prozessen mit den oben genannten kommerziell erhältlichen Schutzfolien mit hinreichender Zuverlässigkeit gewährleistet.
- Tintenstrahldruck ist auf der mit der Schutzfolie versehenen Oberfläche möglich. Ein Wischtest zeigt, dass die Tinte zuverlässig auf der Oberfläche verbleibt.

Identifikationscode (Barcode / Data Matrix Code / Quick Response) auf der Schutzfolie zur eindeutigen Identifikation mittels Tintenstrahl- (InkJet-) Druckverfahren.

## Patentansprüche

1. Brillenglasrohling (1), mit
- einer für die objektseitige Anordnung für einen Brillenträger bestimmten und optisch fertig bearbeiteten optischen Vorderfläche (3),
- einer für die gegenüberliegende augenseitige Anordnung für einen Brillenträger bestimmten optischen Rückfläche, und
- einer dazwischen liegenden, entweder unmittelbar eine Kante bildend oder mittelbar über eine Kantenfläche einendseitig an die Vorderfläche und andernendseitig an die Rückfläche angrenzenden Zylinderrandfläche (4), und
mit einer Schutzfolie (2) auf der optisch fertig bearbeiteten Fläche (3),
wobei die Schutzfolie (2) auf der der Vorderfläche (3) des Brillenglasrohlings zugewandten Seite einen Haftkleber (2a) aufweist, der eine lösbare Verbindung zwischen Vorderfläche (3) und Schutzfolie bewirkt (2);
**dadurch gekennzeichnet, dass** die Schutzfolie auch auf der Zylinderrandfläche (4) angeordnet ist und dass der Haftkleber (2a) auch eine lösbare Verbindung zwischen Zylinderrandfläche (4) und Schutzfolie (2) bewirkt.

2. Brillenglasrohling (1) nach Anspruch 1, **dadurch gekennzeichnet, dass** die Zylinderrandfläche (4) einen Umfang aufweist und die Schutzfolie (2) längs des gesamten Umfangs auf der Zylinderrandfläche (4) angeordnet ist.

3. Brillenglasrohling (1) nach einem der vorangegangenen Ansprüche, **dadurch gekennzeichnet, dass** die Zylinderrandfläche (4) eine Zylinderrandhöhe (h) aufweist und die Schutzfolie (2) ausgehend von einer umlaufenden Grenzlinie (6), an der die Zylinderrandfläche (4) an die optisch fertig bearbeitete Fläche (3) grenzt, über ein Mindestmaß (hat) aus der nachfolgenden Gruppe:
(i) 0,5 mm
(ii) 1 mm
(iii) 2 mm
(iv) die Hälfte der Zylinderrandhöhe (h/2)
(v) die gesamte Zylinderrandhöhe (h)
auf der Zylinderrandfläche (4) angeordnet ist.

4. Brillenglasrohling (1) nach einem der vorangegangenen Ansprüche, **dadurch gekennzeichnet, dass** die Schutzfolie (2) eine temporäre Markierung (7) und/oder einen Identifikationscode aufweist.

5. Verfahren zum Herstellen eines Brillenglases aus einem Brillenglasrohling (1) mit
- einer für die objektseitige Anordnung für einen Brillenträger bestimmten und optisch fertig bearbeiteten optischen Vorderfläche (3),
- einer für die gegenüberliegende augenseitige Anordnung für einen Brillenträger bestimmten optischen Rückfläche, und
- einer dazwischen liegenden, entweder unmittelbar eine Kante bildend oder mittelbar über eine Kantenfläche einendseitig an die Vorderfläche und andernendseitig an die Rückfläche angrenzenden Zylinderrandfläche (4),
bei dem auf die optisch fertig bearbeitete Fläche (3) eine Schutzfolie (2) appliziert wird,
wobei die Schutzfolie (2) auf der der Vorderfläche (3) des Brillenglasrohlings zugewandten Seite einen Haftkleber (2a) aufweist, der eine lösbare Verbindung zwischen Vorderfläche (3) und Schutzfolie bewirkt (2);
**dadurch gekennzeichnet, dass** die Schutzfolie auch auf die Zylinderrandfläche (4) appliziert wird und dass der Haftkleber (2a) auch eine lösbare Verbindung zwischen Zylinderrandfläche (4) und Schutzfolie (2) bewirkt.

6. Verfahren nach Anspruch 5, **dadurch gekennzeichnet, dass** die Zylinderrandfläche (4) einen Umfang aufweist und dass die Schutzfolie (2) längs des gesamten Umfangs auf der Zylinderrandfläche (4) appliziert wird.

7. Verfahren nach einem der Ansprüche 5 oder 6, **dadurch gekennzeichnet, dass** die Zylinderrandfläche (4) eine Zylinderrandhöhe (h) aufweist und die Schutzfolie (2) ausgehend von einer umlaufenden Grenzlinie (6), an der die Zylinderrandfläche (4) an die optisch fertig bearbeitete Fläche (3) grenzt, über ein Mindestmaß (hat) aus der nachfolgenden Gruppe:
(i) 0,5 mm
(ii) 1 mm
(iii) 2 mm
(iv) die Hälfte der Zylinderrandhöhe (h/2)
(v) die gesamte Zylinderrandhöhe (h)
auf der Zylinderrandfläche (4) appliziert wird.

8. Verfahren nach einem der Ansprüche 5 bis 7, **dadurch gekennzeichnet, dass** die Schutzfolie (2) bei einer Temperatur (T) der Schutzfolie aus der Gruppe:
(i) zwischen 45°C und 85°C
(ii) zwischen 50°C und 80°C
(iii) zwischen 55°C und 75°C
(iv) zwischen 60°C und 70°C
(v) zwischen 62°C und 68°C
(vi) zwischen 64°C und 66 °C
auf die optisch fertig bearbeitete Fläche (3) und die Zylinderrandfläche (4) appliziert wird.

9. Verfahren nach Anspruch 8, **dadurch gekennzeichnet, dass** die Schutzfolie (2) auf die optisch fertig bearbeitete Fläche (3) und die Zylinderrandfläche (4) mit Hilfe eines mechanischen Formteils (5) appliziert wird.

10. Verfahren nach Anspruch 8 oder 9, **dadurch gekennzeichnet, dass** die Schutzfolie (2) mit Hilfe eines atmosphärischen Unterdrucks (p) zwischen Schutzfolie (2) und optisch fertig bearbeiteter Fläche (3) und/oder Zylinderrandfläche (4) aus der nachfolgend angegebenen Gruppe
(i) zwischen 10 und 1000 hPa
(ii) zwischen 100 und 900 hPa
(iii) zwischen 200 und 800 hPa
(iv) zwischen 300 und 700 hPa
(v) zwischen 400 und 600 hPa
appliziert wird.

11. Verfahren nach einem der Ansprüche 5 bis 10, **dadurch gekennzeichnet, dass** die Schutzfolie (2) innerhalb eines Zeitraums aus der Gruppe:
(i) weniger als 72 Stunden
(ii) weniger als 48 Stunden
(iii) weniger als 24 Stunden
(iv) weniger als 12 Stunden
(v) weniger als 6 Stunden
(vi) weniger als 3 Stunden
(vii) weniger als 1 Stunde
(viii) weniger als 30 Minuten
nach Fertigstellen (201) der optisch fertig bearbeiteten Fläche (3) appliziert (202) wird.

12. Verfahren nach einem der Ansprüche 5 bis 11, **dadurch gekennzeichnet, dass** der Brillenglasrohling (1) mit der applizierten Schutzfolie (2) verpackt (203) wird.

13. Verfahren nach Anspruch 12, **dadurch gekennzeichnet, dass** der verpackte Brillenglasrohling versandt (204) wird.

14. Verfahren nach Anspruch 12 oder 13, **dadurch gekennzeichnet, dass** der verpackte Brillenglasrohling ausgepackt (206) wird, dass der ausgepackte Brillenglasrohling auf der Schutzfolie mit einem Blockstück (8) geblockt (207) wird und/oder mit einer temporären Markierung (7) versehen (207) wird.

15. Verfahren nach Anspruch 14, **dadurch gekennzeichnet, dass** der geblockte Brillenglasrohling wenigstens einem Bearbeitungsschritt (207) aus der nachfolgenden Gruppe
(i) Formgeben der der optisch fertig bearbeiteten Fläche (3) gegenüberliegenden Fläche
(ii) Aufbringen wenigstens einer Funktionsschicht auf die gegenüberliegende formgebend bearbeitete Fläche
(iii) Aufbringen einer temporären Markierung (7) auf die Schutzfolie (2)
(iv) End- oder Formranden der Zylinderrandfläche (4) zur Anpassung des Zylinderrandes an eine ein gebrauchsfertiges Brillenglas aufnehmende Fassungsform,
(v) Abblocken
(vi) Entfernen der Schutzfolie
(vii) Aufbringen wenigstens einer Funktionsschicht auf die optisch fertig bearbeitete Fläche nach Entfernen der Schutzfolie
unterzogen wird.

## Claims

1. Spectacle lens blank (1), with
- an optical front surface (3), which is intended for the object-side arrangement for a spectacle wearer and is optically finished,
- an optical rear surface, which is intended for the opposing eye-side arrangement for a spectacle wearer, and
- a cylinder edge surface (4) lying in between, either forming an edge directly or indirectly via an edge surface at one end adjoining the front surface and at the other end adjoining the rear surface, and
with a protective film (2) on the optically finished surface (3),
wherein the protective film (2) has on the side facing the front surface (3) of the spectacle lens blank a pressure-sensitive adhesive (2a), which brings about a detachable connection between the front surface (3) and the protective film (2);
**characterized in that** the protective film is also arranged on the cylinder edge surface (4), and **in that** the pressure-sensitive adhesive (2a) also brings about a detachable connection between the cylinder edge surface (4) and the protective film (2).

2. Spectacle lens blank (1) according to Claim 1, **characterized in that** the cylinder edge surface (4) has a circumference and the protective film (2) is arranged on the cylinder edge surface (4) along the entire circumference.

3. Spectacle lens blank (1) according to one of the preceding claims, **characterized in that** the cylinder edge surface (4) has a cylinder edge height (h) and the protective film (2), starting from a peripheral boundary line (6) at which the cylinder edge surface (4) adjoins the optically finished surface (3), is arranged over a minimum dimension (hat) from the following group:
(i) 0.5 mm
(ii) 1 mm
(iii) 2 mm
(iv) half the cylinder edge height (h/2)
(v) the entire cylinder edge height (h)
on the cylinder edge surface (4).

4. Spectacle lens blank (1) according to one of the preceding claims, **characterized in that** the protective film (2) has a temporary marking (7) and/or an identification code.

5. Method for producing a spectacle lens from a spectacle lens blank (1) with
- an optical front surface (3), which is intended for the object-side arrangement for a spectacle wearer and is optically finished,
- an optical rear surface, which is intended for the opposing eye-side arrangement for a spectacle wearer, and
- a cylinder edge surface (4) lying in between, either forming an edge directly or indirectly via an edge surface at one end adjoining the front surface and at the other end adjoining the rear surface,
in which a protective film (2) is applied to the optically finished surface (3),
wherein the protective film (2) has on the side facing the front surface (3) of the spectacle lens blank a pressure-sensitive adhesive (2a), which brings about a detachable connection between the front surface (3) and the protective film (2);
**characterized in that** the protective film is also applied to the cylinder edge surface (4), and **in that** the pressure-sensitive adhesive (2a) also brings about a detachable connection between the cylinder edge surface (4) and the protective film (2).

6. Method according to Claim 5, **characterized in that** the cylinder edge surface (4) has a circumference and **in that** the protective film (2) is applied to the cylinder edge surface (4) along the entire circumference.

7. Method according to either of Claims 5 and 6, **characterized in that** the cylinder edge surface (4) has a cylinder edge height (h) and the protective film (2), starting from a peripheral boundary line (6) at which the cylinder edge surface (4) adjoins the optically finished surface (3), is applied over a minimum dimension (hat) from the following group:
(i) 0.5 mm
(ii) 1 mm
(iii) 2 mm
(iv) half the cylinder edge height (h/2)
(v) the entire cylinder edge height (h)
to the cylinder edge surface (4).

8. Method according to one of Claims 5 to 7, **characterized in that** the protective film (2) at a temperature (T) of the protective film from the group:
(i) between 45°C and 85°C
(ii) between 50°C and 80°C
(iii) between 55°C and 75°C
(iv) between 60°C and 70°C
(v) between 62°C and 68°C
(vi) between 64°C and 66°C
is applied to the optically finished surface (3) and the cylinder edge surface (4).

9. Method according to Claim 8, **characterized in that** the protective film (2) is applied to the optically finished surface (3) and the cylinder edge surface (4) with the aid of a mechanical mould part (5).

10. Method according to Claim 8 or 9, **characterized in that** the protective film (2) is applied with the aid of an atmospheric negative pressure (p) between the protective film (2) and the optically finished surface (3) and/or cylinder edge surface (4) from the group specified below
(i) between 10 and 1000 hPa
(ii) between 100 and 900 hPa
(iii) between 200 and 800 hPa
(iv) between 300 and 700 hPa
(v) between 400 and 600 hPa.

11. Method according to one of Claims 5 to 10, **characterized in that** the protective film (2) is applied (202) within a period of time from the group:
(i) less than 72 hours
(ii) less than 48 hours
(iii) less than 24 hours
(iv) less than 12 hours
(v) less than 6 hours
(vi) less than 3 hours
(vii) less than 1 hour
(viii) less than 30 minutes
after completion (201) of the optically finished surface (3) .

12. Method according to one of Claims 5 to 11, **characterized in that** the spectacle lens blank (1) is packed (203) with the applied protective film (2).

13. Method according to Claim 12, **characterized in that** the packed spectacle lens blank is dispatched (204).

14. Method according to Claim 12 or 13, **characterized in that** the packed spectacle lens blank is unpacked (206), **in that** the unpacked spectacle lens blank is blocked (207) on the protective film with a block piece (8) and/or is provided (207) with a temporary marking (7) .

15. Method according to Claim 14, **characterized in that** the blocked spectacle lens blank is subjected to at least one processing step (207) from the following group
(i) shaping the surface opposite from the optically finished surface (3)
(ii) applying at least one functional layer to the opposite shaped surface
(iii) applying a temporary marking (7) to the protective film (2)
(iv) edging or remote edging of the cylinder edge surface (4) to adapt the cylinder edge to a shape of a frame receiving a ready-to-use spectacle lens
(v) blocking
(vi) removing the protective film
(vii) applying at least one functional layer to the optically finished surface after removing the protective film.

## Revendications

1. Palet de verre de lunettes (1), comprenant
- une surface optique avant (3) optiquement finie destinée à être disposée du côté objet par rapport à un porteur de lunettes,
- une surface arrière optique destinée à être disposée du côté œil opposé par rapport à un porteur de lunettes, et
- une surface de bord cylindrique intermédiaire (4) qui forme directement un bord ou bien qui est adjacente, indirectement par une surface de bord, à une extrémité à la surface avant et à l'autre extrémité à la surface arrière, et
un film protecteur (2) sur la surface optiquement finie (3),
le film protecteur (2) comportant du côté dirigé vers la surface avant (3) du palet de verre de lunettes un adhésif sensible à la pression (2a) qui réalise une liaison amovible entre la surface avant (3) et le film protecteur (2) ;
**caractérisé en ce que** le film protecteur est également disposé sur la surface de bord cylindrique (4) et **en ce que** l'adhésif sensible à la pression (2a) réalise également une liaison amovible entre la surface de bord cylindrique (4) et le film protecteur (2).

2. Palet de verre de lunettes (1) selon la revendication 1, **caractérisé en ce que** la surface de bord cylindrique (4) a une circonférence et le film protecteur (2) est disposé sur toute la circonférence de la surface de bord cylindrique (4).

3. Palet de verre de lunettes (1) selon l'une des revendications précédentes, **caractérisé en ce que** la surface de bord cylindrique (4) présente une hauteur de bord cylindrique (h) et le film protecteur (2) est disposé sur la surface de bord cylindrique (4), à partir d'une ligne limite circonférentielle (6) au niveau de laquelle la surface de bord cylindrique (4) est adjacente à la surface optiquement finie (3), au-delà d'une dimension minimale (hat) du groupe suivant :
(i) 0,5 mm
(ii) 1 mm
(iii)2 mm
(iv) la moitié de la hauteur de bord cylindrique (h/2)
(V)toute la hauteur de bord cylindrique (h).

4. Palet de verre de lunettes (1) selon l'une des revendications précédentes, **caractérisé en ce que** le film protecteur (2) comporte un marquage temporaire (7) et/ou un code d'identification.

5. Procédé de fabrication d'un verre de lunettes à partir d'un palet de verre de lunettes (1) comprenant
- une surface optique avant (3) optiquement finie destinée à être disposée du côté objet par rapport à un porteur de lunettes,
- une surface arrière optique destinée à être disposée du côté œil opposé par rapport à un porteur de lunettes, et
- une surface de bord cylindrique intermédiaire (4) qui forme directement un bord ou bien qui est adjacente, indirectement par une surface de bord, à une extrémité à la surface avant et à l'autre extrémité à la surface arrière, et
procédé dans lequel un film protecteur (2) est appliqué sur la surface optiquement finie (3),
le film protecteur (2) comportant du côté dirigé vers la surface avant (3) du palet de verre de lunettes un adhésif sensible à la pression (2a) qui réalise une liaison amovible entre la surface avant (3) et le film protecteur (2) ;
**caractérisé en ce que** le film protecteur est également appliqué sur la surface de bord cylindrique (4) et **en ce que** l'adhésif sensible à la pression (2a) réalise également une liaison amovible entre la surface de bord cylindrique (4) et le film protecteur (2).

6. Procédé selon la revendication 5, **caractérisé en ce que** la surface de bord cylindrique (4) a une circonférence et **en ce que** le film protecteur (2) est appliqué sur toute la circonférence de la surface de bord cylindrique (4).

7. Procédé selon l'une des revendications 5 ou 6, **caractérisé en ce que** la surface de bord cylindrique (4) présente une hauteur de bord cylindrique (h) et le film protecteur (2) est disposé sur la surface de bord cylindrique (4), à partir d'une ligne limite circonférentielle (6) au niveau de laquelle la surface de bord cylindrique (4) est adjacente à la surface optiquement finie (3), au-delà d'une dimension minimale (hat) du groupe suivant :
(i) 0,5 mm
(ii) 1 mm
(iii)2 mm
(iv) la moitié de la hauteur de bord cylindrique (h/2)
(V) toute la hauteur de bord cylindrique (h).

8. Procédé selon l'une des revendications 5 à 7, **caractérisé en ce que** le film protecteur (2) est appliqué sur la surface optiquement finie (3) et la surface de bord cylindrique (4) à une température (T) du film protecteur du groupe :
(i)entre 45 °C et 85 °C
(ii) entre 50 °C et 80 °C
(iii)entre 55 °C et 75 °C
(iv) entre 60 °C et 70 °C
(v)entre 62 °C et 68 °C
(vi) entre 64 °C et 66 °C.

9. Procédé selon la revendication 8, **caractérisé en ce que** le film protecteur (2) est appliqué sur la surface optiquement finie (3) et la surface de bord cylindrique (4) à l'aide d'une pièce moulée mécanique (5) .

10. Procédé selon la revendication 8 ou 9, **caractérisé en ce que** le film protecteur (2) est appliqué à l'aide d'une pression atmosphérique négative (p) entre le film protecteur (2) et la surface optiquement finie (3) et/ou la surface de bord cylindrique (4) du groupe suivant
(i)entre 10 et 1000 hPa
(ii) entre 100 et 900 hPa
(iii)entre 200 et 800 hPa
(iv) entre 300 et 700 hPa
(v)entre 400 et 600 hPa.

11. Procédé selon l'une des revendications 5 à 10, **caractérisé en ce que** le film protecteur (2) est appliqué (202) dans un délai du groupe suivant :
(i)moins de 72 heures
(ii) moins de 48 heures
(iii)moins de 24 heures
(iv) moins de 12 heures
(v)moins de 6 heures
(vi) moins de 3 heures
(vii)moins d'une heure
(viii) moins de 30 minutes
après achèvement (201) de la surface optiquement finie (3) .

12. Procédé selon l'une des revendications 5 à 11, **caractérisé en ce que** le palet de verre de lunettes (1) pourvu du film protecteur appliqué (2) est emballé (203) .

13. Procédé selon la revendication 12, **caractérisé en ce que** le palet de verre de lunettes emballé est expédié (204).

14. Procédé selon la revendication 12 ou 13, **caractérisé en ce que** le palet de verres de lunettes emballée est déballé (206), **en ce que** le palet de verres de lunettes déballé est bloqué (207) sur le film protecteur avec une pièce de blocage (8) et/ou est pourvu (207) d'un marquage temporaire (7).

15. Procédé selon la revendication 14, **caractérisé en ce que** le palet de verre de lunettes bloqué est soumis à au moins une étape de traitement (207) du groupe suivant
(i) mettre en forme la surface opposée à la surface optiquement finie (3)
(ii) appliquer au moins une couche fonctionnelle sur la surface formée opposée
(iii) appliquer un marquage temporaire (7) sur le film protecteur (2)
(iv) conformer ou finaliser le bord de la surface de bord cylindrique (4) afin d'adapter le bord cylindrique à une forme de monture qui reçoit un verre de lunettes prêt à l'emploi,
(v) effectuer un blocage
(vi) retirer le film protecteur
(vii) appliquer au moins une couche fonctionnelle sur la surface optiquement finie après que le film protecteur a été retiré.
